# EUROPEAN PATENT APPLICATION

(11) **EP 4 503 530 A1**
(43) Date of publication of application: **05.02.2025**
(21) Application number: 23779258.5
(22) Date of filing: 06.03.2023
(51) Int. Cl.: H04L 27/26, H04B 3/06, H04J 13/22

(54) **TRANSMITTER, METHOD AND PROGRAM**

(30) Priority: 31.03.2022 JP 2022058072
(71) Applicant: KDDI Corporation, Tokyo 163-8003 (JP)
(72) Inventor: WATANABE, Taishi, Fujimino-shi, Saitama 356-8502 (JP); OHSEKI, Takeo, Fujimino-shi, Saitama 356-8502 (JP); YAMAZAKI, Kosuke, Fujimino-shi, Saitama 356-8502 (JP)
(74) Representative: Pitchford, James Edward
(86) International application number: PCT/JP2023/008236
(87) International publication number: WO 2023/189229

(57) **Abstract**

A transmitter 10 paired with a receiver 20 that performs non-linear distortion compensation with deep learning, configured to: separately generate a pilot signal for non-linear distortion compensation to be used by the receiver 20 and a pilot signal for channel estimation to be used by the receiver 20; and transmit the generated pilot signals to the receiver 20.

## Description

### TECHNICAL FIELD

The present invention relates to a transmitter, a method, and a program that are suitable for a configuration that performs non-linear distortion compensation on the receiving side.

### BACKGROUND ART

Conventional technologies relating to non-linear distortion compensation of a power amplifier that is utilized in communication such as 5G (fifth generation mobile communication system) being performed on the receiving side are disclosed in PTL1 and NPL1.

In PTL1, compensation of non-linear distortion is performed on the receiving side utilizing non-constant envelopes. This is conceivably because, in the case of performing compensation of non-linear distortion on the receiving side, sufficient compensation cannot be achieved when a signal having a large amplitude is generated, in the case where distortion is learned using a Zadoff-Chu sequence (ZC sequence) having a constant amplitude as is used in 5G.

Also, in NPL1, compensation of non-linear distortion is performed on the receiving side, utilizing a neural network. Since all subcarriers transmit a pilot signal, a block pilot symbol is transmitted every frame before the data symbol, and compensation of the propagation path and compensation of non-linear distortion are performed at the same time by inputting the results of LS (Least Squares) estimation that uses the block pilot symbols to the neural network.

### CITATION LIST

### PATENT LITERATURE

PTL1: Japanese Patent Laid-Open No. 2021-507605

### NON-PATENT LITERATURE

NPL1: K. Mei, J. Liu, X. Zhang, K. Cao, N. Rajatheva, and J. Wei, 'A Low Complexity Learning-Based Channel Estimation for OFDM Systems With Online Training', IEEE Transactions on Communications, vol. 69, no. 10, pp. 6722-6733, Oct. 2021

### SUMMARY OF INVENTION

### TECHNICAL PROBLEM

However, conventional techniques for non-linear distortion compensation on the receiving side such as described above still have room for improvement in terms of efficiency.

That is, a problem with PTL1 is that, in the case where non-constant envelopes are sent as pilot signals, all of the non-constant envelopes need to be disposed in independent resources in consideration of the influence of interference with other users, and resource utilization efficiency is poor. Also, a problem with NPL1 is that propagation path estimation and non-linear distortion estimation are performed at the same time, and block pilot symbols need to be sent at a similar frequency to the propagation path estimation, and thus transmission efficiency deteriorates significantly.

### SOLUTION TO PROBLEM

In view of the above problems with the conventional technologies, an object of the present invention is to provide a technology that enables non-linear distortion compensation to be performed efficiently from the viewpoint of resource utilization efficiency, transmission efficiency and the like.

In order to achieve the above mentioned object, the present invention is a transmitter paired with a receiver that performs non-linear distortion compensation by deep learning, configured to: separately generate a pilot signal for non-linear distortion compensation to be used by the receiver and a pilot signal for channel estimation to be used by the receiver; and transmit the generated pilot signals to the receiver.

### ADVANTAGEOUS EFFECTS OF INVENTION

According to the present invention, it is possible to enable the receiver to perform non-linear distortion compensation efficiently, by separately generating a pilot signal for non-linear distortion compensation and a pilot signal for channel estimation.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram showing the configuration of a communication system according to one embodiment and a procedure that is implemented in the configuration.
FIG. 2 is a diagram showing a frame configuration including pilot signals generated in the one embodiment in comparison to a comparative example.
FIG. 3 is a diagram listing attributes of a pilot signal for channel estimation and a pilot signal for non-linear distortion compensation in the frame configuration of the present embodiment in tabular format.
FIG. 4 is a diagram showing an example of the configuration of a computer device provided with a wireless communication function.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

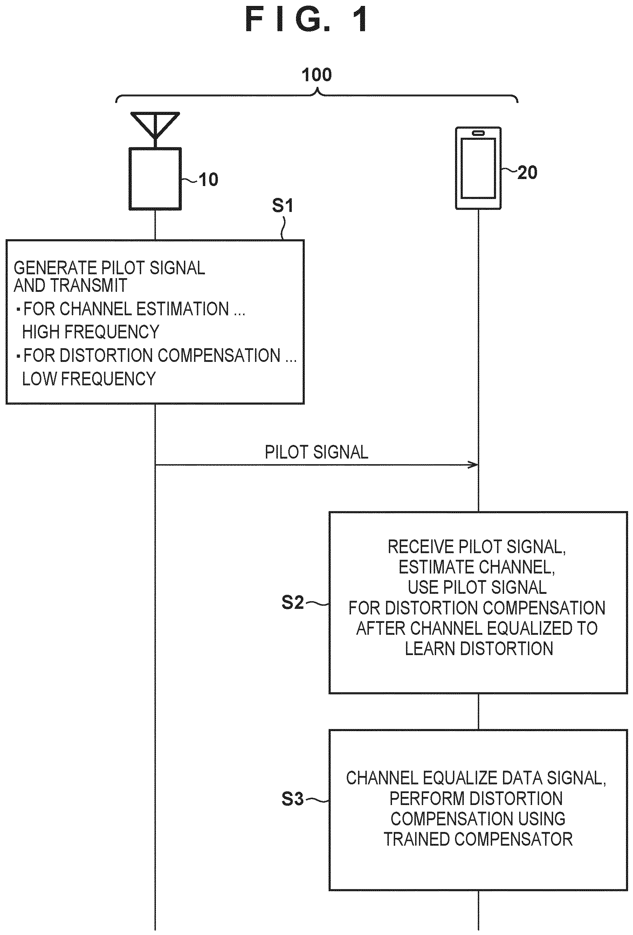

FIG. 1 is a diagram showing the configuration of a communication system 100 according to one embodiment and steps S 1 to S3 of a procedure that is implemented in the configuration. The communication system 100 is part of a cellular communication system (mobile communication network) supporting 5G, for example, and includes a transmitter 10 serving as a base station device and a receiver 20 serving as a user terminal which is a mobile communication device such as a smartphone. Note that, hereinafter, the case where pilot signals are transmitted downstream as shown in FIG. 1 will be described as an example, but the present embodiment is applicable in exactly the same manner in the opposite case where pilot signals are transmitted upstream (the transmitter 10 (base station) in FIG. 1 is on the receiving side and the receiver 20 (user terminal) is on the transmitting side in relation to the pilot signals). (In other words, the transmitter 10 and the receiver 20 in FIG. 1 are named according to the direction in which the pilot signals are transmitted/received, and the transmitter 10 in FIG. 1 may be a user terminal and the receiver 20 may be a base station device.) While there can be a plurality of transmitters 10 and receivers 20, an arbitrary one of each which is capable of wireless communication with the other devices is shown in FIG. 1 out of the plurality of devices that can exist, and steps S1 to S3 are shown as a procedure that is executed between the transmitter 10 and the receiver 20 in the wirelessly communicable state. Hereinafter, each of steps S1 to S3 will be described.

In step S1, the transmitter 10 generates a frame containing a pilot signal and transmits this frame to the receiver 20. In this generation of a pilot signal within a frame, as a technique that improves on the technique of NPL1 (hereinafter referred to as the "comparative example", etc., in contrast to the present embodiment), the pilot signal for channel estimation (for transmission line estimation) and the pilot signal for non-linear distortion estimation are distinguished from each other, unlike the pilot signals of the comparative example, with the pilot signal for channel estimation being generated with higher frequency within frames, and the pilot signal for non-linear distortion estimation being generated with lower frequency within frames.

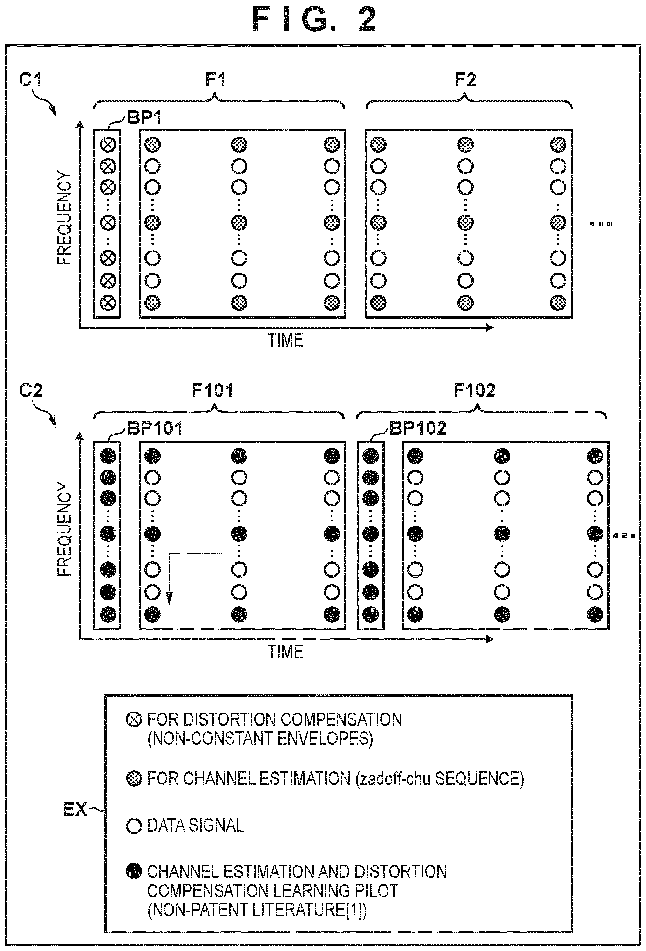

FIG. 2 is a diagram showing a frame configuration C1 containing pilot signals that are generated in the present embodiment in comparison to a frame configuration C2 of the comparative example. Note that a legend field EX is provided in order to show the contents of these frame configurations C1 and C2.

With the frame configuration C2 of the comparative example, in all of chronologically-ordered OFDM (orthogonal frequency-division multiplexing) frames F101, F102, ...., channel estimation and distortion compensation are learned at the same time using pilot signals (indicated by black circles in the diagram) that are for both channel estimation and distortion compensation, and thus the need arises to constantly send block pilots BP101, BP 102, ... for the individual frames F101, F102, ... in order to address channel variation.

On the other hand, with the frame configuration C 1 of the present embodiment, in chronologically-ordered OFDM (orthogonal frequency-division multiplexing) frames F1, F2, ..., pilot signals for distortion compensation (indicated by circles with an × mark in the diagram) and pilot signals for channel estimation (indicated by gray circles in the diagram) are provided separately, with the former being generated and transmitted with lower frequency and the latter being generated and transmitted with higher frequency.

That is, in the present embodiment, only distortion compensation, which is considered to have relatively little variation, is learned with a block pilot BP1 of frame F1, for example, and the result can be commonly utilized in the subsequent ten frames F1, F2, F3, ..., F10 (frame F3 onward are not shown in FIG. 2). Accordingly, in the present embodiment, there is no need to generate a block pilot every frame as in the comparative example C2, and a block pilot need only be generated at a rate of once every several frames (predetermined plurality of frames) such as every 10 frames, for example.

Accordingly, as described above, given that channel estimation and non-linear distortion compensation are performed at the same time with a pilot signal that is used for both channel estimation and non-linear distortion compensation in the comparative example, there is a problem in that the transmission frequency of block pilot symbols increases to a level comparable to the frequency of channel estimation, and transmission efficiency deteriorates significantly, whereas, in the present embodiment, transmission efficiency can be improved by addressing this problem.

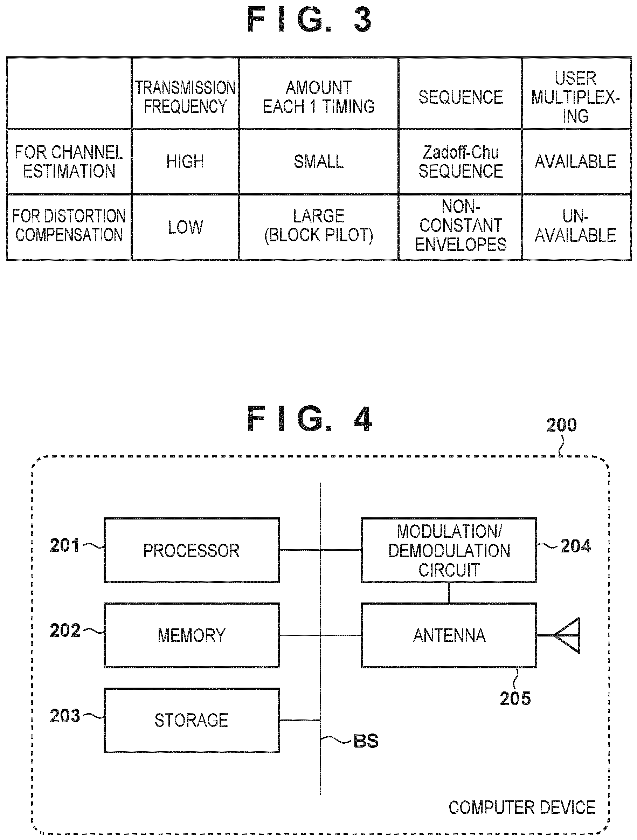

FIG. 3 lists the attributes of the pilot signal for channel estimation and the pilot signal for non-linear distortion compensation in the frame configuration C1 of the present embodiment in tabular format. Given that the ZC sequence, which is an orthogonal sequence, is used for the sequence of pilot signals for channel estimation that are transmitted with higher frequency, user multiplexing (user separation) is possible, and the aforementioned problem with the technique of PTL1, namely, poor resource utilization efficiency due to an independent resource being required for every user in consideration of the influence of interference with other users given that non-constant envelopes that have lost orthogonality are used for the pilot signals, can be addressed with the present embodiment.

On the other hand, in the present embodiment, a block pilot in an OFDM frame that is intermittently generated/transmitted only once every several frames (shorter than one frame constituted by a plurality of timeslots by being constituted by one timeslot) can be constituted by all (or part) thereof in a sequence of non-constant envelopes.

Returning to the description of the steps of FIG. 1, in step S2, the receiver 20 receives the frame containing the pilot signal generated and transmitted by the transmitter 10 in step S 1, and performs channel estimation by LS estimation of the block pilot BP1 or the like, and learns non-linear distortion using a pilot signal for distortion compensation after channel equalization. That is, a trained compensator is obtained, by obtaining a channel estimation result at the time from the block pilot BP 1, obtaining a block pilot BP1_{[channel equalized]} that is channel-equalized using this channel estimation result, and learning non-linear distortion from this channel-equalized block pilot BP1_{[channel equalized]}. In step S3, the receiver 20 further channel equalizes data signals of corresponding times (data signals shown by white circles in FIG. 2 and contained within frames F 1, F2, ... in which pilot signals for channel estimation are constituted as scattered pilots), by performing channel estimation from the pilot signals for channel estimation (shown by gray circles in FIG. 2), and obtains distortion compensated data signals, by performing distortion compensation using the compensator trained in step S2.

With regard to the processing of steps S2 and S3, the processing content itself may be similar to the comparative example (NPL1), except that the data that is handled is a frame containing a pilot signal according to the present embodiment, and a distinction is made between pilot signals for channel estimation and pilot signals for distortion compensation.

As described above, according to the present embodiment, channel estimation and non-linear distortion compensation processing are separated, and different pilot signals are used for each, with channel estimation being implemented with higher frequency and non-linear distortion estimation being implemented with lower frequency. As effects of the present embodiment, transmission frequency of the pilot signal for distortion compensation which has poor resource utilization efficiency and transmission efficiency can be reduced, and resource utilization efficiency and transmission efficiency in the case where distortion compensation processing on the receiving side is performed can be improved.

FIG. 4 is a diagram showing an example of a configuration of a computer device 200 provided with a wireless communication function, and the transmitter 10 and the receiver 20 in the wireless communication system 100 can each be realized as a device having the configuration of the computer device 200.

The computer device 200 includes a processor 201 constituted by a CPU (and GPU) and the like, a memory 202 serving as a temporary storage device that provides a work area to the processor 201, a storage 203 serving as a secondary storage device, a modulation/demodulation circuit 204, an antenna 205, and a bus BS that connects these devices in a manner that allows for communication of digital data therebetween.

The processor 201 executes the respective processing (relating to digital processing) of the transmitter 10 and the receiver 20 in each of the embodiments described above, by executing a predetermined program stored in the storage 203 and loaded into the memory 202. That is, in the transmitter 10, the processor 201 executes the pilot signal generation and transmission processing of step S1 as a predetermined program. Also, in the receiver 20, the processor 201 executes the channel estimation and distortion learning by deep learning of steps S2 and S3 on signals as a predetermined program.

The antenna 205 may be constituted to include a plurality of antennas, and may be capable of configuring a plurality of beam patterns by switching the antennas that are used. The modulation/demodulation circuit 204 modulates and demodulates wireless signals that are transmitted and received from the antenna 205.

The communication system 100 of the present embodiment is able to improve resource utilization efficiency and transmission efficiency in the case of performing distortion compensation processing on the receiving side, and is thus able to contribute to infrastructure development of information and communication technologies. It is thereby possible to contribute to Goal 9 of the Sustainable Development Goals (SDGs) spearheaded by the United Nations, which is to "build resilient infrastructure, promote inclusive and sustainable industrialization, and foster innovation".

The present invention is not limited to the above embodiments and various changes and modifications can be made within the spirit and scope of the present invention. Therefore, to apprise the public of the scope of the present invention, the following claims are made.

The present application claims priority to Japanese Patent Application No. 2022-058072 filed on March 31, 2022, and the entire content thereof is incorporated herein by reference.

## Claims

1. A transmitter paired with a receiver that performs non-linear distortion compensation by deep learning, configured to:
separately generate a pilot signal for non-linear distortion compensation to be used by the receiver and a pilot signal for channel estimation to be used by the receiver; and transmit the generated pilot signals to the receiver.

2. The transmitter according to claim 1,
wherein the transmitter, when generating the pilot signals, is further configured to increase a second frequency for generating the pilot signal for channel estimation to higher than a first frequency for generating the pilot signal for non-linear distortion compensation.

3. The transmitter according to claim 2,
wherein the transmitter increases the second frequency to higher than the first frequency, by intermittently generating the pilot signal for channel estimation within a plurality of consecutive frames, and generating the pilot signal for non-linear distortion compensation within a pilot block that is intermittently generated between the plurality of consecutive frames.

4. The transmitter according to any one of claims 1 to 3,
wherein the transmitter generates the pilot signal for non-linear distortion compensation as a sequence of non-constant envelopes.

5. The transmitter according to any one of claims 1 to 4,
wherein the transmitter generates the pilot signal for channel estimation as a ZC sequence.

6. A method for execution by a transmitter paired with a receiver that performs non-linear distortion compensation by deep learning, the method comprising:
separately generating a pilot signal for non-linear distortion compensation to be used by the receiver and a pilot signal for channel estimation to be used by the receiver; and transmitting the generated pilot signals to the receiver.

7. A program for causing a computer to function as a transmitter paired with a receiver that performs non-linear distortion compensation by deep learning, the program causing the computer to execute:
separately generating a pilot signal for non-linear distortion compensation to be used by the receiver and a pilot signal for channel estimation to be used by the receiver; and transmitting the generated pilot signals to the receiver.
